# EUROPÄISCHE PATENTSCHRIFT

(11) **EP 0 640 746 B1**
(45) Veröffentlichungstag und Bekanntmachung des Hinweises auf die Patenterteilung: **20.11.1996**
(21) Anmeldenummer: 94113170.8
(22) Anmeldetag: 24.08.1994
(51) Int. Cl.: F01D 21/04, F01D 25/04

(54) **Rotorgehäuse, insbesondere Gehäuse für Turbotriebwerke**
Rotor casing for gasturbine
Carter de rotor pour turbine à gaz

(30) Priorität: 28.08.1993 DE 4329014
(43) Veröffentlichungstag der Anmeldung: 01.03.1995
(73) Patentinhaber: MTU MOTOREN- UND TURBINEN-UNION MÜNCHEN GMBH, D-80976 München (DE)
(72) Erfinder: Sikorski, Siegfried, D-80538 München (DE); Schönacher, Reinhold, D-80999 München (DE); Schober, Michael, D-80999 München (DE); Diepolder, Wolfgang, Dr., D-85356 Freising (DE)

(56) Entgegenhaltungen:
- EP-A- 0 286 815
- DE-A- 2 359 938
- DE-C- 3 704 197
- FR-A- 2 442 992
- GB-A- 2 084 251
- GB-A- 2 095 749
- US-A- 5 187 023

## Beschreibung

Die Erfindung bezieht sich auf ein Rotorgehäuse, insbesondere Gehäuse für Turbotriebwerke mit einem den äußeren Umfang des Gehäuses umfassenden Spannband und einer zwischen diesem und dem Gehäuse angeordneten Zwischenschicht.

Ein Rotorgehäuse der vorbezeichneten, gattungsgemäßen Bauart ist aus der DE-PS 37 04 197 bekannt. Die Ausbildung des vorbekannten Rotorgehäuses mit Spannband und Zwischenschicht dient dem Zweck des Berstschutzes, d. h. es soll damit verhindert werden, daß im Fall eines Schaufelbruches aufgrund hoher Zentrifugalbeschleunigungen Bauteile ungehindert nach außen geschleudert werden. Ein wesentliches Merkmal der vorbekannten Konstruktion besteht darin, daß dieSchicht zwischen dem Spannband und dem Gehäuse zur Reibungsreduzierung ausgebildet ist, d. h. ein möglichst gutes Gleitverhalten zwischen Spannband einerseits und Gehäuseoberfläche andererseits bewirken soll.

Die der vorliegenden Erfindung zugrunde liegende Aufgabe beschäftigt sich mit der Problematik der Schwingungsempfindlichkeit insbesondere von Gehäusen von Turbotriebwerken, die bekanntermaßen mit sehr hohen Drehzahlen laufen. Solche Rotorgehäuse werden durch aerodynamische und rotordynamische Effekte angeregt und im Fall der Anregung im Bereich der Eigenfrequenz besteht eine erhebliche Gefahr der Beschädigung oder gar Zerstörung.

Eine bekannte Maßnahme zur Dämpfung hochfrequenter Schwingungen ist das Anbringen von Dämpfungslacken, Dämpfungsspachtelmassen oder Dämpfungsfolien am Umfang des Gehäuses. Als nachteilig erweist sich dabei die umständliche Demontierbarkeit, beispielsweise zu Wartungs- und Prüfzwecken. Hiervon ausgehend soll die Aufgabe gelöst werden, ein Rotorgehäuse mit geringer Schwingungsintensität zu schaffen, wobei geringer Bauaufwand und Wartungsfreundlichkeit gewährleistet sein sollen.

Erfindungsgemäß wird die Aufgabe dadurch gelöst, daß bei einem gattungsgemäßen Rotorgehäuse die Zwischenschicht als geschlossenes Dämpfungsband ausgebildet ist, welches das Gehäuse konturgetreu anliegend umgibt, wobei der Werkstoff des Dämpfungsbandes so gewählt ist, daß zwischen Dämpfungsband und Gehäuse ein hoher Reibungskoeffizient auftritt und der Werkstoff des Spannbandes einen vom Gehäusewerkstoff verschiedenen E-Modul aufweist.

Das erfindungsgemäße Rotorgehäuse hat den Vorteil, daß aufgrund der geringen Teilezahl der Bauaufwand bei effektiver Schwingungsdämpfung gering gehalten werden kann. Zur Reduzierung der Gehäuseschwingung führen dabei zwei Mechanismen: Zum einen erfolgt die Dämpfung der Schwingung durch Reibung zwischen Dämpfungsband und Gehäuseoberfläche einerseits und durch Reibung zwischen Dämpfungsband und Spannband andererseits und zum anderen führen die unterschiedlichen E-Module des Gehäusewerkstoffes und des Werkstoffes des Spannbandes zu unterschiedlichem Schwingverhalten der beiden Komponenten, wodurch die Schwingungsintensität gering bleibt. Auch bleibt das Gehäuse an seinem äußeren Umfang z. B. für Inspektions- und Wartungszwecke zugänglich, da das Dämpfungsband durch Lösen und Öffnen des Spannbandes vom Gehäuse abgenommen werden kann. Ebenso sind Reparaturen nach Abnahme des Dämpfungsbandes ohne Einschränkung durchführbar. Demnach ist ein Nachrüsten von herkömmlichen Gehäusen möglich deren Schwingungsproblematik sich erst nach der Fertigstellung bzw. Entwicklung herausstellt.

Eine besonders wirkungsvolle Dämpfung des Schwingungssytems mit den Komponenten Rotor, Gehäuse und Schwingungsdämpfer ergibt sich durch die Verwendung eines gummielastischen Elastomers als Werkstoff für das Dämpfungsband. Dadurch bewirkt das vom Gehäusewerkstoff verschiedene spezifische Gewicht des Dämpfungsbandes zusammen mit dem unterschiedlichen E-Modul eine unterschiedliche Eigenfrequenz der Schwingungskomponenten, wodurch die Schwingungsneigung des Gehäuses erheblich verringert wird.

Weitere vorteilhafte Ausführungen der Erfindung und insbesondere des Spannbandes hinsichtlich Leichtbauweise und Dämpfungswirkung ergeben sich durch die Merkmale des Anspruchs 3.

In einer bevorzugten Ausbildung der Erfindung umfaßt das Dämpfungsband das Gehäuse am gesamten Umfang einlagig, wodurch sich ein Optimum an Dämpfungswirkung, geringem Bauaufwand und Gewichtsersparnis ergibt. Weitere vorteilhafte Ausführungen der Erfindung hinsichtlich Aufwand und Wirkung ergeben sich aus den Merkmalen der Ansprüche 5 bis 7. Generell ist eine Breite von Dämpfungs- und Spannband zwischen 5 bis 40 % der Gesamtlänge des Gehäuses ausreichend.

Wichtig für eine optimale Schwingungsdämpfung ist eine gewisse Relativbewegung zwischen Dämpfungsband und Gehäuse einerseits und dem Spannband andererseits, wobei die entstehende Reibung die Schwingungsdämpfung bewirkt. Die hierzu notwendige Andruckkraft des Dämpfungsbandes aufdas Gehäuse läßt sich vorzugsweise durch Einstellung der Umfangsspannung des Spannbandes mittels einer lösbaren Spannvorrichtung erzielen. Zur weiteren Vereinfachung des Bauaufwandes ist hierzu die Spannvorrichtung zwischen zwei gegenüberliegenden Enden des Spannbandes zur gegenseitigen Verspannung der Enden vorgesehen.

Für die Verwendung des Schwingungsdämpfers auch an verrippten Gehäusen weist das Dämpfungsband eine entsprechende Kontur zur Aufnahme der Rippen auf, um durch möglichst großflächigen Kontakt mit der Gehäuseaußenseite eine optimale Schwingungsdämpfung zu ermöglichen.

Für eine bessere Handhabbarkeit und für einen optimalen Kontakt des Spannbandes mit dem Dämpfungband ist das Spannband vorzugsweise gemäß Anspruch 13 ausgeführt, wonach die radiale Dicke des Spannbandes zu den Enden des Spannbandes hin zunimmt.

Da das Gehäuse stellenweise über Streben, Stege u. ä. nach außen hin mit anderen Maschinenteilen in Verbindung steht, weisen Spannband und Dämpfungsband Durchbrüche zur Hindurchführung der Streben bzw. Stege auf, um auch an solchen Verbindungsbereichen des Gehäuses angebrcht werden zu können. Zudem erlauben Durchbrüche auch den Zugang zu Gehäuseteilen für Inspektionszwecke.

Eine bei der Montage unerwünschte Längenänderung des Dämpfungsbandes kann bei Verwendung einer dehnsteifen Einlage ausgeschlossen werden. Um eine Beshädigung des Dämpfungsbandes durch Kunststoff, Öl oder dgl. zu vermeiden, kann das Dämpfungsband von einer Schutzfolie umschlossen sein.

Eine bevorzugte Ausführungsform der Erfindung wird nachfolgend unter Bezugnahme auf die beigefügte Zeichnung erläutert. Es zeigt:
- Fig. 1: eine teilgeschnittene Seitenansicht eines Turbo-Strahltriebwerks,
- Fig. 2: eine Ausschnittsvergrößerung gemäß Fig. 1 des Triebwerksgehäuses,
- Fig. 3: einen Querschnitt des Turbo-Strahltriebwerks im Bereich des Spannbandes gemäß Fig. 1.

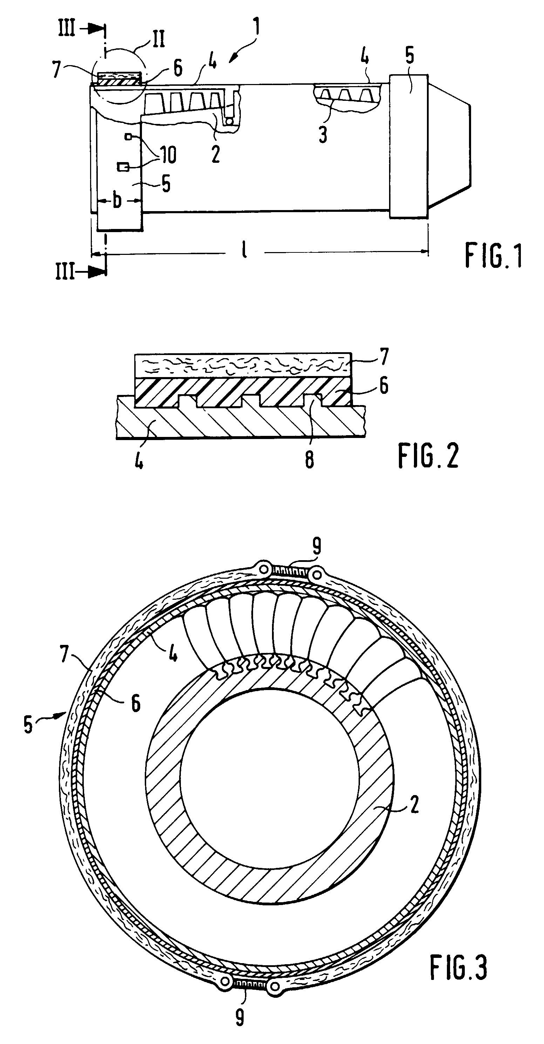

In Fig. 1 ist ein Turbo-Strahltriebwerk 1 mit einem Verdichterrotor 2 und einem Turbinenrotor 3 gezeigt. Beide Rotoren 2 und 3 sind im Triebwerksgehäuse 4 gelagert und regen im Betrieb das Triebwerksgehäuse 4 aufgrund aerodynamischer und rotordynamischer Effekte zu Schwingungen an. Teile des Triebwerksgehäuses 4, welche nicht unmittlbar in Verbindung mit Lagerstellen stehen, neigen dabei zu erhöhter Schwingung. Zur Verringerung bzw. zur Vermeidung dieser Schwingungen weist das Triebwerksgehäuse 4 an seinem freien Ende im Bereich des Verdichterrotors 2 eine Schwingungsdämpfung 5 auf. Eine weitere Schwingungsdämpfung 5 ist für das Triebwerksgehäuse 4 im Bereich des Turbinenrotors 3 vorgesehen, wobei der Aufbau der Schwingungsdämpfungen 5 im wesentlichen identisch ist.

Die Schwingungsdämpfung 5 setzt sich im wesentlichen aus einem Dämpfüngs- und einem Spannband 6 bzw. 7 zusammen, deren Breite b entspricht einem Bruchteil der Gesamtlänge 1 des Turbo-Strahltriebwerks 1 und beträgt hier etwa 10 % der Gesamtlänge 1. Wesentlich für die Dämpfüngswirkung ist ein möglichst großflächiger Kontakt des Dämpfungsbandes 6 mit der Oberfläche des Triebwerksgehäuses 4. Hierzu umfaßt das Dämpfungsband 6 das tonnenförmige Triebwerksgehäuse 4 an einem äußeren Umfang und liegt dort konturgetreu an. Da das Triebwerksgehäuse 4 an seinem äußeren Umfang Rippen 8 zur Versteifung aufweist, werden auch diese vom Dämpfungsband 6 konturgetreu umfaßt. Das Dämpfungsband 6 ist daher an seiner Innenseite mit entsprechenden Vertiefungen zur Aufnahme der Rippen 8 oder anderer Erhebungen des Triebwerksgehäuses 4 versehen, wie dies in Fig. 2 detailliert dargestelt ist. Das Dämpfüngsband 6 wiederrum wird an seinem radial äußeren Umfang vom Spannband 7 umfaßt, welches das Dämpfungsband 6 am Triebwerksgehäuse 4 fixiert. Wie auch das Dämpfungsband 6 am äußeren Umfang des Triebwerksgehäuses 4 anliegt, liegt das Spannband 7 möglichst großflächig und konturgetreu am Dämpfungsband 6 an. Die hierdurch entstehende Reibfläche zwischen Dämpfüngsband 6 und Spannband 7 bewirkt bei Schwingungsanregung eine minimale Relativbewegung zwischen den beiden Bändern 6 und 7 unter Entstehung von Reibungwärme. Die Dämpfüngwirkung ist größtenteils auf diesen Effekt zurückzufuhren, wobei der gewählte Werkstoff für das Dämpfungsband 6 - ein Elastomer - für einen hohen Reibungskoeffizient zwischen Spannband 7 einerseits und Triebwerksgehäuse 4 andererseits verantwortlich ist. Die vom Werkstoff des Triebwerksgehäuses 4 - ein Metall - sich ergebende verschiedene Eigenfrequenz des Spannbandes 6 resultiert aus einem gegenüber Metallen unterschiedlichen E-Modul und spezifischem Gewicht. Die gewählten, in ihrer Eigenfrequenz unterschiedlichen Werkstoffe führen zu einer Verstimmung des Schwingungssystems mit den Komponenten Triebwerksgehäuse 4 und Spann- bzw. Dämpfüngsband, wodurch ein Resonanzschwingen des Triebwerksgehäuses 4 gegenüber den Rotoren 2 bzw. 3 vermieden wird. Für das Spannband 7 wurde ein Faserverbundwerkstoff gewählt, dessen Basiswerkstoff ein Elastomer ist.

Zum Zwecke der besseren Montierbarkeit setzt sich das Spannband 7 aus mehreren ringstückförmigen Bandelementen zusammen, deren Enden mittels einstell- und lösbarer Spannvorrichtungen 9 zu einem geschlossenen ringförmigen Spannband 7 verbunden sind. Die Spannvorrichtungen 9 gewährleisten eine sichere Fixierung des Schwingungsdämpfers 5 am Triebwerksgehäuse 4 bei optimaler Einstellung der Reibkraft zwischen Triebwerksgehäuse 4, Dämpfungsband 6 und Spannband 7. Das Spannband 7 weist eine zunehmende Dicke zu den Spannelementen 9 hin auf, wodurch das Spannband 7 gewichtssparend bei ausreichender Festigkeit im Bereich der Spannvorrichtungen 9 ausgeführt werden kann.

Im Bereich von Gehäusedeckeln sind Durchbrüche 10 vorgesehen, die den Zugang zu den Gehäusedeckeln für Inspektionszwecke freigeben.

## Patentansprüche

1. Rotorgehäuse, insbesondere Gehäuse für Turbotriebwerke mit einem den äußeren Umfang des Gehäuses umfassenden Spannband und einer zwischen diesem und dem Gehäuse angeordneten Zwischenschicht, dadurch gekennzeichnet, daß die Zwischenschicht als geschlossenes Dämpfüngsband (6) ausgebildet ist, welches das Gehäuse (4) konturgetreu anliegend umgibt, wobei der Werkstoff des Dämpfungsbandes (6) so gewählt ist, daß zwischen Dämpfungsband und Gehäuse ein hoher Reibungskoeffizient auftritt und der Werkstoff des Spannbandes (7) einen vom Gehäusewerkstoff verschiedenen E-Modul aufweist.

2. Rotorgehäuse nach Anspruch 1, dadurch gekennzeichnet, daß der Werkstoff des Dämpfungsbandes (6) ein gummielastisches Elastomer ist.

3. Rotorgehäuse nach den Ansprüchen 1 oder 2, dadurch gekennzeichnet, daß der Werkstoff des Dämpfungsbandes (6) ein Faserverbundwerkstoff, insbesondere ein GFK, CFK oder SFK ist.

4. Rotorgehäuse nach den Ansprüchen 1 bis 3, dadurch gekennzeichnet, daß das Dämpfungsband (6) das Gehäuse (4) einlagig im wesentlichen am gesamten Umfang umfaßt.

5. Rotorgehäuse nach den Ansprüchen 1 bis 4, dadurch gekennzeichnet, daß die Breite (b)des Dämpfungsbandes (6) auf die schwingungsempfindliche Länge des Gehäuses (4) abgestimmt ist und die Breite (b) des Dämpfüngsbandes (6) einem Bruchteil der Gesamtlänge des Gehäuses (4) entspricht.

6. Rotorgehäuse nach einem der vorhergehenden Ansprüche, dadurch gekennzeichnet, daß das Dämpfüngsband (6) an seiner Innenseite der Außenkontur des Gehäuses (4) am umfaßten Umfang angepaßt ist.

7. Rotorgehäuse nach einem der vorhergehenden Ansprüche, dadurch gekennzeichnet, daß die Umfangsspannung des Spannbandes (7) mittels einer lösbaren Spannvorrichtung (9) einstellbar ist.

8. Rotorgehäuse nach einem der vorhergehenden Ansprüche, dadurch gekennzeichnet, daß mehrere bogenförmige, jeweils an ihren Enden miteinander lösbar verbundene Bandelemente ein ringförmiges Spannband (7) bilden.

9. Rotorgehäuse nach einem der vorhergehenden Ansprüche, dadurch gekennzeichnet, daß der Werkstoff des Spannbandes (7) ein faserverstärkter Kunststoff ist.

10. Rotorgehäuse nach Anspruch 9, dadurch gekennzeichnet, daß der Basiswerkstoff des Spannbandes (7) ein Elastomer ist.

11. Rotorgehäuse nach einem der vorhergehenden Ansprüche, dadurch gekennzeichnet, daß der E-Modul des Spannband-Werkstoffes ungleich dem des Dämpfungsbandes (6) ist.

12. Rotorgehäuse nach einem der vorhergehenden Anprüche, dadurch gekennzeichnet, daß es an seiner Außenseite verrippt ist und das Dämpfungsband (6) im Bereich der Rippen (2) entsprechende Vertiefungen aufweist.

13. Rotorgehäuse nach einem der vorhergehenden Ansprüche, dadurch gekennzeichnet, daß die radiale Dicke des Spannbandes (7) zu den Enden des Spannbandes (7) hin zunimmt.

14. Rotorgehäuse nach einem der vorhergehenden Ansprüche, dadurch gekennzeichnet, daß Spann- und Dämpfungsband Durchbrüche (10) aufweisen.

15. Rotorgehäuse nach einem der vorhergehenden Ansprüche, dadurch gekennzeichnet, daß das Dämpfüngsband (7) von einer Schutzfolie umschlossen ist.

## Claims

1. A rotor casing, in particular a casing for turbine engines, comprising a clamping band surrounding the outer circumference of the casing, and an intermediate layer arranged between the clamping band and the casing, characterised in that the intermediate layer is formed as a closed damping band (6) surrounding the casing (4) so as to conform to the contours thereof, the material of the damping band (6) being selected so that there is a high friction co-efficient between the damping band and the casing, and the material of the clamping band (7) having an elasticity modulus different from the material of the casing.

2. A rotor casing according to claim 1, characterised in that the material of the damping band (6) is a rubber elastomer.

3. A rotor casing according to claims 1 and 2, characterised in that the material of the damping band (6) is a fibre composite, in particular a glass-fibre reinforced plastics, a carbon-fibre reinforced plastics or a synthetic-fibre reinforced plastics.

4. A rotor casing according to claims 1 to 3, characterised in that a single layer of the damping band (6) surrounds the casing (4) substantially over the entire circumference.

5. A rotor casing according to claims 1 to 4, characterised in that the breadth (b) of the damping band (6) corresponds to the length of the casing (4) susceptible to vibration and the breadth (b) of the damping band (6) is a fraction of the overall length of the casing (4).

6. A rotor casing according to any one of the preceding claims, characterised in that the inner surface of the damping band (6) is adapted to the outer contours of the surrounded part of the circumference of the casing (4).

7. A rotor casing according to any one of the preceding claims, characterised in that the degree of circumferential clamping by the clamping band (7) is adjustable by means of a detachable clamping device (9).

8. A rotor casing according to any one of the preceding claims, characterised in that a plurality of curved band members, detachably interconnected at their ends, form an annular clamping band (7).

9. A rotor casing according to any one of the preceding claims, characterised in that the material of the clamping band (7) is a fibre-reinforced plastics.

10. A rotor casing according to claim 9, characterised in that the base material of the clamping band (7) is an elastomer.

11. A rotor casing according to any one of the preceding claims, characterised in that the elasticity modulus of the material of the clamping band is different from that of the damping band (6).

12. A rotor casing according to any one of the preceding claims, characterised in that its outer surface is ribbed and the damping band (6) has corresponding recesses in the region of the ribs (2).

13. A rotor casing according to any one of the preceding claims, characterised in that the radial thickness of the clamping band (7) increases towards the ends of the clamping band (7).

14. A rotor casing according to any one of the preceding claims, characterised in that the clamping and damping bands have openings (10).

15. A rotor casing according to any one of the preceding claims, characterised in that the damping band (7) [sic - 6] is covered with a protective film.

## Revendications

1. Carter de rotor, en particulier carter de turbopropulseur dont la périphérie externe est enveloppée par une bande de serrage avec interposition d'une couche intermédiaire,
caractérisé en ce que
la couche intermédiaire est constituée par une bande amortisseuse (6), entourant le carter (4) en étroit contact avec son contour, le matériau constituant cette bande (6) étant choisi de manière que le coefficient de frottement entre la bande (6) et le carter (4) soit élevé et que le module d'élasticité de la bande de serrage (7) soit différent de celui du matériau constituant le carter.

2. Carter de rotor selon la revendication 1,
caractérisé en ce que
le matériau constituant la bande amortisseuse (6) est un élastomère élastique à la manière du caoutchouc.

3. Carter de rotor selon les revendication 1 ou 2,
caractérisé en ce que
le matériau constituant la bande amortisseuse (6) est un matériau renforcé par des fibres, notamment du plastique renforcé par des fibres de verre, par des fibres de carbone ou de silicone.

4. Carter de rotor selon les revendication 1 à 3,
caractérisé en ce que
la bande amortisseuse (6) comporte une seule couche enveloppant essentiellement le carter (4) sur toute sa périphérie.

5. Carter de rotor selon les revendication 1 à 4,
caractérisé en ce que
la largeur (b) de la bande amortisseuse (6) est accordée à la longueur pouvant vibrer du carter (4), cette largeur étant une fraction de la longueur totale du carter (4).

6. Carter de rotor selon une des revendication précédentes,
caractérisé en ce que
la bande amortisseuse (6), sur sa face interne, est adaptée au contour externe du boîtier (4) le long de la partie périphérique de celui-ci et entourée par la bande.

7. Carter de rotor selon une des revendication précédentes,
caractérisé en ce que
la tension périphérique de la bande de serrage (7) peut être réglée par un dispositif de tension (9) séparable.

8. Carter de rotor selon une des revendication précédentes,
caractérisé en ce que
la bande de serrage (7) en forme d'anneau est constituée par l'assemblage de plusieurs éléments courbes, reliés entre eux par leurs extrémités, de manière séparable.

9. Carter de rotor selon une des revendication précédentes,
caractérisé en ce que
le matériau constituant la bande de serrage (7) est un plastique renforcé par des fibres.

10. Carter de rotor selon une des revendication précédentes,
caractérisé en ce que
le matériau de base de la bande de serrage (7) est un élastomère.

11. Carter de rotor selon une des revendication précédentes,
caractérisé en ce que
le module d'élasticité du matériau constituant la bande de serrage est différent de celui du matériau de la bande amortisseuse (6).

12. Carter de rotor selon une des revendication précédentes,
caractérisé en ce que
il porte sur sa surface externe des nervures et que la bande amortisseuse (6) présente des creux en correspondance avec ces nervures (2).

13. Carter de rotor selon une des revendication précédentes,
caractérisé en ce que
l'épaisseur radiale de la bande de serrage (7) croît en allant vers les extrémités de cette bande.

14. Carter de rotor selon une des revendication précédentes,
caractérisé en ce que
les bandes de serrage et d'amortissement présentent des ouvertures (10).

15. Carter de rotor selon une des revendication précédentes,
caractérisé en ce que
la bande amortisseuse (7) est enveloppée par une pellicule de protection.
